# EUROPÄISCHE PATENTANMELDUNG

(11) **EP 1 361 396 A2**
(43) Veröffentlichungstag der Anmeldung: **12.11.2003**
(21) Anmeldenummer: 03009373.6
(22) Anmeldetag: 25.04.2003
(51) Int. Cl.: F24D 3/14

(54) **Trägerelement für ein Betonkerntemperierungsmodul**

(30) Priorität: 11.05.2002 DE 10221020
(71) Anmelder: REHAU AG + Co, 95111 Rehau (DE)
(72) Erfinder: Kübler, Rainer, 95111 Rehau (DE); Koch, Klaus, Paul, 95111 Rehau (DE)

(57) **Zusammenfassung**

Trägerelement für ein Betonkerntemperierungsmodul für Betondecken oder Betonböden, dadurch gekennzeichnet, dass es wenigstens einen Einhängeabschnitt mit mehreren in unterschiedlichen Höhen angeordneten Aufnahmen zum Einhängen des Betonkerntemperierungsmoduls aufweist.

## Beschreibung

Die Erfindung betrifft ein Trägerelement für ein Betonkerntemperierungsmodul für Betondecken oder Betonböden.

Im Gebäudebau werden Böden oder Decken zunehmend aus vorgefertigten Teilen gebildet, die entweder schon als Fertigteile vom Betonwerk angeliefert werden, oder die vor Ort fertiggestellt werden. Dabei werden vor allem in größeren Gebäuden zunehmend Böden oder Decken eingebaut, in denen in der neutralen Faser, also in der mittigen Horizontalebene, in der auch bei einer leichten Verbiegung der Decke keine Kräfte wirken, Rohrleitungen in der Regel mäanderförmig verlegt sind, durch die ein Heiz- oder Kühlmedium zirkuliert. Diese Rohrleitungen sind vollständig in das Betonelement eingegossen. Zum Temperieren des Gebäudes - sei es, dass dieses erwärmt oder gekühlt werden soll - wird durch die Rohrleitungen ein Medium, in der Regel Wasser gepumpt, wodurch sich das Betonteil je nachdem erwärmt oder abkühlt. Auf diese Weise ist ein einfaches Temperieren des Gebäudes möglich, wobei man diese sogenannte Betonkerntemperierung vornehmlich zum Kühlen eines Gebäudes einsetzt, da hierdurch große Kühlleistungen im Bereich von 50 - 70 W/m2 erreicht werden können.

Der Aufbau eines solchen Betonelements erfolgt zumeist vor Ort auf dem Baufeld. Normalerweise wird von der Rohbaufirma die untere Schalungsebene bauseits erstellt. Auf diese untere Schalungsebene werden zunächst Abstandshalter zur Gewährleistung einer ausreichenden Einbettung der unteren Bewehrung aufgebracht, auf die dann die untere Bewehrungslage aufgelegt wird. Nun werden auf die untere Bewehrungslage sogenannte Betonkerntemperierungsmodule aufgelegt. Bei diesen handelt es sich um auf großflächigen Trägermatten, sogenannten Q-Matten vorkonfektionierte Rohre, durch die letztlich das Medium zirkuliert. Nachfolgend werden Abstandshalter in die untere Bewehrungslage eingestellt, wonach auf diese die obere Bewehrungslage aufgelegt wird.

Um nun die Betonkerntemperierungsmodule in die Mitte anzuheben; ist es aus DE 39 06 729 C1 bekannt, diese unter Verwendung geeigneter Aufhängemittel in Form hakenförmiger Elemente an der oberen Bewehrungslage aufzuhängen, wozu die Betonkerntemperierungsmodule angehoben werden müssen. Anschließend erfolgt der Verguss. Eine alternative Methode, wie sie aus DE 198 32 289 A1 bekannt ist, schlägt demgegenüber den Einsatz eines Bewehrungsbocks mit Querträgern vor, die derart hoch an den Vertikalstreben des Bocks angeordnet sind, dass sich ein an ihnen befestigtes Rohrregister bzw. Betonkerntemperierungsmodul in der Mitte des Betonelements befindet. Zum Befestigen an den Querträgern werden Kabelbinder verwendet.

Nachteilig bei den aus dem Stand der Technik bekannten, ein Betonkerntemperierungsmodul tragenden Trägerelementen ist jedoch, dass die Positionierung des Betonkerntemperierungsmoduls sehr umständlich ist. Ein weiterer Nachteil besteht darin, dass die bekannten Trägerelemente es nur ermöglichen, das Betonkerntemperierungsmodul in einer vorgegebenen Höhe befestigen zu können. So ist zum einen die Verwendung der aus DE 39 06 729 C 1 bekannten Aufhängehaken sehr umständlich. Darüber hinaus kann nicht gewährleistet werden, dass das Betonkerntemperierungsmodul tatsächlich in einer Ebene positioniert werden kann, da aufgrund der Befestigung der Aufhängehaken an der oberen Bewehrungslage und dem Umstand, dass dies häufig in bestimmten Bereichen etwas durchhängt und folglich ebenfalls nicht in einer Ebene liegt, folglich auch das Betonkerntemperierungsmodul nicht eben positioniert werden kann. Ferner sind für unterschiedliche Modulhöhen unterschiedlich lange Aufhängehaken bereitzuhalten. Dies gilt auch für die aus DE 198 32 289 A1 bekannten Bewehrungs- oder Abstandsböcke, die ebenfalls die Befestigung des Betonkerntemperierungsmoduls nur in einer Höhenlage ermöglichen. Bei einer Änderung der Decken- oder Bodenstärke müssen auch hier unterschiedliche Abstandsböcke hergestellt und eingesetzt werden.

Der Erfindung liegt das Problem zugrunde, ein Trägerelement anzugeben, das ein einfaches Halten eines Betonkerntemperierungsmoduls bei gleichzeitig möglicher Variabilität hinsichtlich der Positionierungshöhe ermöglicht.

Zur Lösung dieses Problems ist bei einem Trägerelement der eingangs genannten Art erfindungsgemäß vorgesehen, dass es wenigstens einen Einhängeabschnitt mit mehreren in unterschiedlichen Höhen angeordneten Aufnahmen zum Einhängen des Betonkerntemperierungsmoduls aufweist.

Das erfindungsgemäße Trägerelement bietet die Möglichkeit, das Betonkerntemperierungsmodul an unterschiedlich hoch - bezogen auf die Einbaustellung des Trägerelements - positionierten Aufnahmen nach Bedarf einhängen zu können. Hierdurch ist es möglich, unter Verwendung ein und desselben Trägerelements das Betonkerntemperierungsmodul in von der Aufnahmenlage unterschiedlichen Höhenpositionen positionieren zu können und sich so den Erfordernissen unterschiedlich hoher Betondecken oder -böden ohne weiteres Anpassen oder Unebenheiten ausgleichen zu können. Es sind vorteilhaft keine verschiedenen Trägerelemente für verschiedene Betondecken- oder Bödenstärken herzustellen und bereit zu halten, vielmehr kann ein gemeinsames Trägerelement für unterschiedlich dimensionierte Betonelemente verwendet werden. Das Befestigen des Betonkerntemperierungsmoduls erfolgt auf einfache Weise, da die Aufnahmen zum Einhängen des Moduls ausgebildet sind, so dass die umständlichen Befestigungsmöglichkeiten, wie sie aus dem genannten Stand der Technik bekannt sind, beim erfindungsgemäßen Trägerelement entfallen.

Für ein einfaches Einhängen ist es zweckmäßig, wenn die Aufnahmen in der Einbaustellung nach oben offen sind. Dies ermöglicht es, ein Trägerelement zunächst beispielsweise auf die untere Bewehrungslage, die bereits auf der Schalung, auf der die Betondecke oder der Betonboden gegossen wird, aufgelegt ist, aufzustellen und anschließend von oben das Betonkerntemperierungsmodul aufzusetzen und am Trägerelement einzuhängen. Dabei können die Aufnahmen zweckmäßigerweise an einem in der Einbaustellung im Wesentlichen vertikalen Trägerabschnitt vorgesehen sein, was die Ausbildung als nach oben offene Aufnahmen noch weiter vereinfacht.

Die Aufnahmen selbst sind zweckmäßigerweise als Einhängekerben ausgebildet, in denen das Betonkerntemperierungsmodul zweckmäßigerweise klemmend gehaltert ist, so dass eine kraft- und/oder formschlüssige Halterung der Trägermatte des Betonkerntemperierungsmoduls in der jeweiligen, als Klemmaufnahme ausgebildeten Aufnahme realisiert ist und vermieden wird, dass sich die Modulträgermatte unbeabsichtigt aus einer Aufnahme löst.

Um möglichst viele Wahlmöglichkeiten hinsichtlich der Höhenpositionierung zu realisieren ist es zweckmäßig, wenn der wenigstens eine Einhängeabschnitt wenigstens drei, vorzugsweise vier höhenmäßig versetzt angeordnete Aufnahmen aufweist. Das heißt, vor Ort kann also unter Verwendung eines Trägerelements das Betonkerntemperierungsmodul in drei oder vier unterschiedlichen Ebenen positioniert werden, was in jedem Fall durch einfaches Einhängen der Modulträgermatte möglich ist.

Nach einer ersten Erfindungsausgestaltung kann das Trägerelement als T-Träger mit einem in der Einbaustellung im Wesentlichen horizontalen Aufstellabschnitt, über den das Trägerelement auf die untere Bewehrungslage aufgestellt wird, so dass der Aufstellabschnitt nach dem Gießen der Decke oder des Bodens unterseitig nicht sichtbar ist, und einem dazu im Wesentlichen orthogonal verlaufenden, den wenigstens einen Einhängeabschnitt aufweisenden Trägerabschnitt ausgebildet ist.

Alternativ zur T-Trägerform kann ein erfindungsgemäßes Trägerelement auch zwei vorzugsweise parallel zueinander und in der Einbaustellung im Wesentlichen vertikal stehende, miteinander verbundene Trägerabschnitte umfassen, die jeweils einen Einhängeabschnitt aufweisen, wobei zwei einander gegenüberliegende Einhängeabschnitte beziehungsweise deren Aufnahmen deckungsgleich zueinander sind. Diese Trägerform mit zwei parallelen seitlichen Trägerabschnitten kann als H-Träger oder als U-Träger ausgebildet sein, je nachdem wie und wo der die beiden seitlichen Trägerabschnitte verbindende Verbindungsabschnitt ausgebildet ist.

Eine besonders vorteilhafte Erfindungsausgestaltung sieht vor, dass das Trägerelement als Schiene mit mehreren hintereinander vorgesehenen, jeweils mehrere Aufnahmen aufweisenden Einhängeabschnitten ausgebildet ist.

Das Trägerelement ist also ein längliches, schienenartiges Bauteil mit mehreren hintereinander folgenden Einhängeabschnitten. Die Aufnahmen der einzelnen Einhängeabschnitte sind vorzugsweise identisch, das heißt, die einzelnen Aufnahmen eines Einhängeabschnitts finden sich identisch in jedem nachfolgenden Einhängeabschnitt wieder. Das bedeutet, dass das Betonkerntemperierungsmodul in eine bestimmte Aufnahme eines jeden beliebigen Einhängeabschnitts eingesetzt und trotzdem gleichbleibend höhenmäßig positioniert werden kann.

Im Hinblick darauf, dass die Trägermatte eines Betonkerntemperierungsmoduls ein bestimmtes Rastermaß aufweist, sieht eine vorteilhafte Weiterbildung des Erfindungsgedankens vor, die Einhängeabschnitte beziehungsweise die einzelnen einander entsprechenden Aufnahmen zweier hintereinander folgender Einhängeabschnitte jeweils um ein gleichbleibendes Rastermaß voneinander zu beabstanden, wobei dieses Rastermaß zweckmäßigerweise auf das Rastermaß der Modulträgermatte abgestellt ist. Bekannte Modulträgermatten haben entweder ein Rastermaß von 15 cm oder 20 cm, das heißt, die parallel zueinander verlaufenden Stäbe der Trägermatte sind entweder 15 cm oder 20 cm voneinander beabstandet, so dass sich Mattenöffnungen mit 15 cm oder 20 cm Kantenlänge ergeben. Bei solchen Trägermatten ist es zweckmäßig, wenn das Rastermaß 5 cm oder ein Vielfaches davon beträgt, das heißt, zwei identische Aufnahmen zweier nachfolgender Einhängeabschnitte sind um jeweils 5 cm oder ein Vielfaches davon voneinander beabstandet. Dies ermöglicht es, dass zwei benachbarte Stäbe der Modulträgermatte stets in den höhenmäßig gleichen Aufnahmen zweier Einhängeabschnitte aufgenommen werden können.

Die Schiene kann eine beliebige Länge aufweisen, sie sollte zweckmäßigerweise zwischen 80 cm und 120 cm lang sein. Für den Einsatz vor Ort ist eine Länge von 90 cm bis 100 cm zweckmäßig. Dies ermöglicht es, dass die Trägerelemente, von denen mehrere auf die untere Bewehrungslage aufzulegen sind, um eine sichere Halterung des aufzubringenden Betonkerntemperierungsmoduls zu erreichen, relativ schnell verlegt werden können.

Eine zweckmäßige Erfindungsausgestaltung sieht weiterhin vor, an einer oder zwei einander gegenüberliegenden Seiten des Trägerelements Verbindungsmittel zum Verbinden mit einem anderen Trägerelement vorzusehen. Diese Erfindungsausgestaltung ermöglicht es, aus mehreren vorzugsweise schienenartigen Trägerelementen eine beliebig lange Schiene durch einfaches Verbinden dieser Trägerelemente zu bilden. Dies ist einerseits der Verlegbarkeit förderlich, zum anderen natürlich auch um zu verhindern, dass aufgelegte Trägerelemente verrutschen. Als Verbindungsmittel sind zweckmäßigerweise Steck- und/oder Rast-Verbindungen denkbar, beispielsweise stirnseitig vorgesehene Ausnehmungen, in die gegengleich geformte Vorsprünge des benachbarten Verbindungselements eingreifen etc.

Das Trägerelement selbst wird zweckmäßigerweise aus Kunststoff gefertigt, vornehmlich als Spritzguss- oder als Strangpressteil. Auch eine Ausführung aus Metall ist denkbar.

Neben dem Trägerelement selbst betrifft die Erfindung ferner eine Betondecke oder einen Betonboden, umfassend ein eingegossenes Betonkerntemperierungsmodul, das an ebenfalls eingegossenen Trägerelementen der vorbestimmenden Art gehaltert ist.

Weitere Vorteile, Merkmale und Einzelheiten der Erfindung ergeben sich aus dem im Folgenden beschriebenen Ausführungsbeispielen sowie anhand der Zeichnungen. Dabei zeigen:
- Fig. 1: eine Perspektivdarstellung eines erfindungsgemäßen Trägerelements einer ersten Ausführungsform,
- Fig. 2: eine Prinzipdarstellung eines Aufbaus einer noch zu vergießenden Betondecke auf der Schalung im Schnitt,
- Fig. 3: eine Perspektivdarstellung eines erfindungsgemäßen Trägerelements einer zweiten Ausführungsform, und
- Fig. 4: eine Perspektivdarstellung eines erfindungsgemäßen Trägerelements einer dritten Ausführungsform.

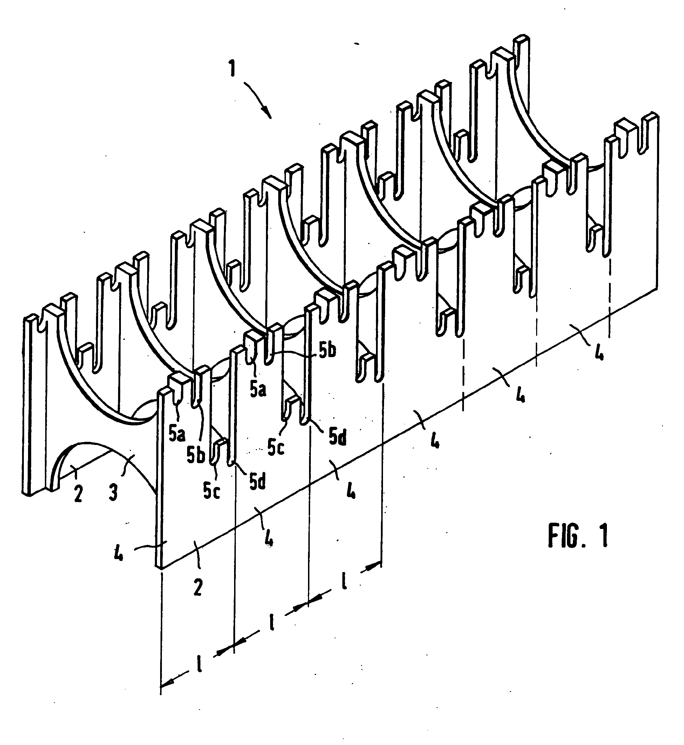

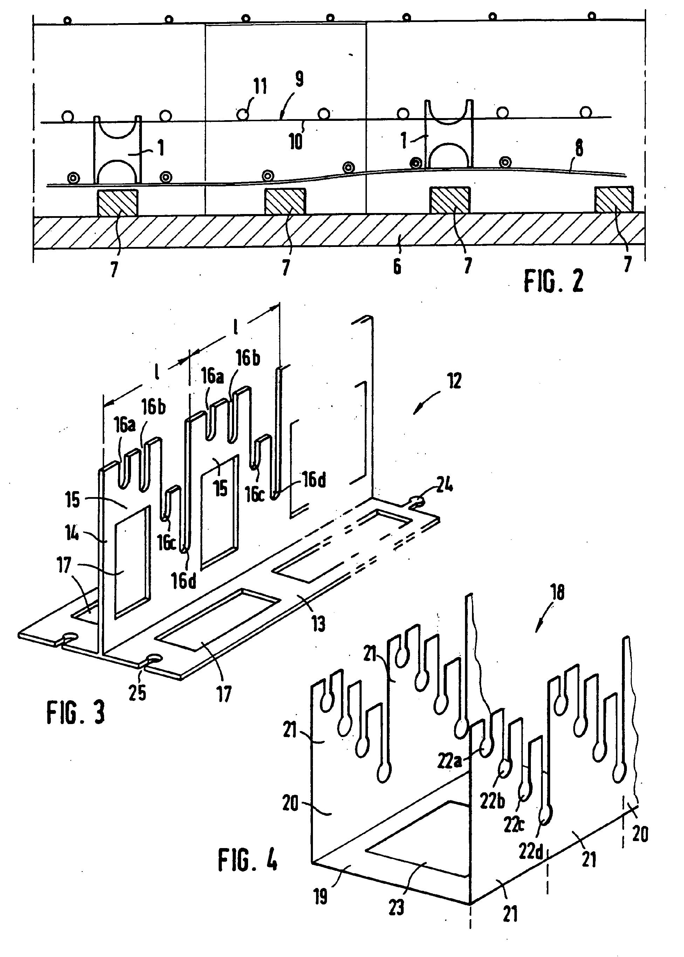

Fig. 1 zeigt ein erfindungsgemäßes Trägerelement 1, das beispielsweise aus Kunststoff besteht und als Spritzgussteil hergestellt wurde. In Stirnansicht ist das Trägerelement 1 nach Art eines H-Trägers ausgebildet mit zwei in der in Fig. 1 gezeigten Einbaustellung im Wesentlichen vertikal stehenden seitlichen Trägerabschnitten 2, die über einen mittleren Verbindungsabschnitt 3 zu dem H-förmigen Träger verbunden sind. Das Trägerelement 1 ist als längliche Schiene ausgebildet mit einer Länge zwischen vorzugsweise 90 bis 100 cm. An jedem Trägerabschnitt sind mehrere in Schienenlängsrichtung gesehen hintereinander ausgebildete Einhängeabschnitte 4 ausgebildet, die gesehen in Schienenlängsrichtung jeweils die gleiche Länge I besitzen, wie Fig. 1 zu entnehmen ist. Jeder Einhängeabschnitt umfasst im gezeigten Ausführungsbeispiel vier nach oben offene, kerbenartige Aufnahmen 5 a, 5 b, 5 c und 5 d, die zum Aufnehmen eines Stabes der Modulträgermatte des Betonkerntemperierungsmoduls dienen. Ersichtlich sind die Aufnahmen 5 a - 5 d in unterschiedlichen Höhen vorgesehen beziehungsweise unterschiedlich tief, so dass die Trägermatte in unterschiedlichen Höhenpositionen eingehängt werden kann. Sie sind als nach oben offene Einkerbungen ausgebildet, die gegebenenfalls als Rast- oder Klemmaufnahmen ausgebildet sein können. Sie sind beispielsweise im oberen Bereich, von woher die Trägermatte einzuführen ist, etwas schmäler und verbreitern sich im unteren Aufnahmebereich, so dass die Trägermatte also etwas kräftig eingedrückt werden muss und dort verrasten kann (siehe z.B. Fig. 4).

Ersichtlich sind die Aufnahmen 5 a - 5 d an den beiden einander gegenüberstehenden Trägerabschnitten 2 deckungsgleich zueinander, das heißt, ein Stab einer Trägermatte durchgreift zwei höhenmäßig gleich positionierte Aufnahmen an den beiden Trägerabschnitten 2. Ferner ist ersichtlich, dass die Aufnahmen 5 a - 5 d zweier einander nachfolgender Einhängeabschnitte 4 höhenmäßig identisch positioniert sind. Das heißt, die Aufnahmen 5 a aller nachfolgenden Abschnitte ist jeweils in der gleichen Höhe, was auch für die anderen Aufnahmen gilt.

Die Einhängeabschnitte 4 beziehungsweise die einzelnen identischen Aufnahmen 5 a - 5 d aller Einhängeabschnitte 4 sind jeweils um ein bestimmtes, von der Länge I vorgegebenes Rastermaß voneinander beabstandet. Dieses Rastermaß beziehungsweise die Länge I beträgt vorzugsweise 5 cm und ist auf das Rastermaß bekannter Modulträgermatten, das entweder 15 cm oder 20 cm beträgt, abgestellt. Das heißt, dass zwei parallele Stäbe einer Modulträgermatte mit einem Rastermaß von 15 cm beispielsweise in die Aufnahme 5 b des links gezeigten ersten Einhängeabschnitts 4 und des von links gesehen vierten Einhängeabschnitts 4 in die dortige Aufnahme 5 b eingehängt werden können.

Fig. 2 zeigt in Form einer Prinzipdarstellung die Einsatzmöglichkeit eines erfindungsgemäßen Trägerelements gemäß Fig. 1. Gezeigt ist eine untere Schalungsebene 6, auf der Abstandshalter 7 zur Gewährleistung einer ausreichenden Betonüberdeckung der unteren Bewehrungslage 8, bei der es sich ebenfalls um eine bekannte Baustahlträgermatte handelt, aufgelegt sind. Ersichtlich ist im gezeigten Ausführungsbeispiel die Bewehrungslage 8 uneben, das heißt, sie liegt nicht vollständig ebenflächig auf den Abstandhaltern 7 auf, sondern wölbt sich im rechten Bildbereich etwas nach oben. Dies kann entweder dadurch hervorgerufen sein, dass die Bewehrungslage 8 von Haus aus etwas verbogen ist, es kann aber auch durch unsachgemäßes Verlegen erfolgt sein.

Auf die untere Bewehrungslage 8 werden nun die Trägerelemente 1 aufgestellt, wobei mehrere Trägerelemente 1 hintereinander angeordnet werden können, um eine längere Schiene zu bilden. Hierzu sind zweckmäßigerweise an den Trägerelemente geeignete Verbindungsmittel zum Verbinden zweier Trägerelemente vorgesehen, die in Fig. 1 nicht näher gezeigt sind. Es kann sich dabei um einfache Steck-Rast-Verbindungen und ähnliches handeln, auch Einhängeabschnitte oder dergleichen sind denkbar. Ersichtlich steht das rechte Trägerelement 1 etwas höher als das linke Trägerelement, hervorgerufen durch die Wölbung der Bewehrungslage 8.

Anschließend wird das Betonkerntemperierungsmodul 9 bestehend aus der Modulträgermatte 10 und der darauf angebrachten Verrohrung 11 auf die Trägerelemente 1 aufgebracht beziehungsweise in die dortigen Aufnahmen eingehängt.

Wie Fig. 2 deutlich zeigt hängt die Modulträgermatte 10 im linken Trägerelement 1 beispielsweise in den beiden Aufnahmen 5 a, während sie im rechten Trägerelement 1 beispielsweise in die Aufnahmen 5 c eingehängt ist. Aufgrund der Höhendifferenz der Aufnahmen 5 a und 5 c verläuft das Betonkerntemperierungsmodul trotz der Wölbung der unteren Bewehrungslage 8 im Wesentlichen in einer Ebene. Anhand von Fig. 2 wird der entscheidende Vorteil, den das erfindungsgemäße Trägerelement hinsichtlich der Positionierung des Betonkerntemperierungsmoduls bietet, nicht nur in dem gezeigten Ausführungsbeispiel mit der gewölbten Bewehrungslage 8 deutlich. Vielmehr ist aus dem Ausführungsbeispiel auch ersichtlich, dass das erfindungsgemäße Trägerelement 1 für die Herstellung unterschiedlich dicker Betonkerndecken oder -böden verwendet werden kann, in denen das Betonkerntemperierungsmodul 9 in unterschiedlichen Ebenen positioniert werden muss. Denn die Möglichkeit, das Betonkerntemperierungsmodul 9 in unterschiedlichen Höhen am Trägerelement 1 einhängen zu können lässt es zu, je nach Bedarf das Modul unterschiedlich hoch und damit auf die tatsächliche Decken- oder Bodenstärke abgestellt positionieren zu können.

Fig. 3 zeigt eine weitere erfindungsgemäße Ausführungsform eines Trägerelements 12. Dieses ist im gezeigten Ausführungsbeispiel als T-Träger ausgebildet und besitzt einen in der Einbaustellung im Wesentlichen horizontalen Aufstellabschnitt 13 und einen dazu im Wesentlichen orthogonal abstehenden Trägerabschnitt 14. Auch hier ist das gleiche Einhängeabschnittsschema realisiert. Gezeigt sind mehrere Einhängeabschnitte 15, die jeweils mehrere höhenmäßig unterschiedlich ausgelegte beziehungsweise unterschiedlich tiefe Aufnahmen 16 a, 16 b, 16 c und 16 d besitzen. Auch hier beträgt das Rastermaß I der Einhängeabschnitte 15 beziehungsweise der Abstand der von Einhängeabschnitt zu Einhängeabschnitt identisch vorgesehenen Aufnahmen vorzugsweise 5 cm.

Fig. 3 zeigt ferner am Aufstellabschnitt 13 vorgesehene Verbindungsmittel zum Verbinden zweier Trägerelemente 12. Die Verbindungsmittel umfassen einen vorspringenden Verbindungszapfen 24, der in eine am benachbarten Trägerelement ausgebildete, entsprechend geformte Aufnahme 25 eingehängt werden kann.

Neben dieser Ausführungsform der Verbindungsmittel sind selbstverständlich auch andere Verbindungsmittelformen denkbar.

Die Verwendung des Trägerelements 12 entspricht der wie bezüglich Fig. 2 zum Trägerelement 1 beschrieben. Auch dieses Trägerelement 1 wird auf die untere Bewehrungslage aufgesetzt, wonach die Modulträgermatte in die entsprechende Aufnahme 16 a - d eingehängt wird.

Ersichtlich sind am Aufstellabschnitt 13 und am Trägerabschnitt 14 mehrere Durchbrechungen 17 vorgesehen. Diese werden beim Vergießen mit Beton durchsetzt und verhindern, dass die vergossene Betonebene von dem Aufstellabschnitt 13 beziehungsweise dem Trägerabschnitt 14 "durchschnitten" wird, wie dies der Fall ist, wenn die entsprechenden Abschnitte geschlossen wären.

Schließlich zeigt Fig. 4 eine dritte erfindungsgemäße Ausführungsform eines Trägerelements 18. Dieses ist hier im Wesentlichen U-förmig ausgeführt und besitzt einen unteren Aufstellabschnitt 19 und zwei seitliche Trägerabschnitte 20, an denen wiederum Einhängeabschnitte 21 mit deckungsgleich vorgesehenen Aufnahmen 22 a, 22 b, 22 c und 22 d ausgebildet sind, wobei auch hier ein entsprechendes Rastermaß zugrunde liegt. Auch hier sind im gezeigten Beispiel am Aufstellabschnitt 19 Durchbrechungen 23 vorgesehen. Gezeigt ist hier die Ausbildung der einzelnen Aufnahmen als Klemmaufnahme mit dem oberen schmälerem und dem unteren breiteren Bereich.

### Bezugszeichenliste

- 1: Trägerelement
- 2: Trägerabschnitt
- 3: Verbindungsabschnitt
- 4: Einhängeabschnitt
- 5a-d: Aufnahmen
- 6: Schalungsebene
- 7: Abstandshalter
- 8: Bewehrungslage
- 9: Betonkerntemperierungsmodul
- 10: Modulträgermatte
- 11: Verrohrung
- 12: Trägerelement
- 13: Aufstellabschnitt
- 14: Trägerabschnitt
- 15: Einhängeabschnitt
- 16a-d: Aufnahmen
- 17: Durchbrechungen
- 18: Trägerelement
- 19: Aufstellabschnitt
- 20: Trägerabschnitt
- 21: Einhängeabschnitt
- 22a-d: Aufnahmen
- 23: Durchbrechung
- 24: Verbindungszapfen
- 25: Aufnahme

- I: Rastermaß

## Patentansprüche

1. Trägerelement für ein Betonkerntemperierungsmodul für Betondecken oder Betonböden, **dadurch gekennzeichnet, dass** es wenigstens einen Einhängeabschnitt (4, 15, 21) mit mehreren in unterschiedlichen Höhen angeordneten Aufnahmen (5a - d, 16a - d, 22a - d) zum Einhängen des Betonkerntemperierungsmoduls (9) aufweist.

2. Trägerelement nach Anspruch 1, **dadurch gekennzeichnet, dass** die Aufnahmen (5a - d, 16a - d, 22a - d) in der Einbaustellung nach oben offen sind.

3. Trägerelement nach Anspruch 1 oder 2, **dadurch gekennzeichnet, dass** die Aufnahmen (5a - d, 16a - d, 22a - d) an einem in der Einbaustellung im Wesentlichen vertikalen Trägerabschnitt (2, 14, 20) vorgesehen sind.

4. Trägerelement nach einem der vorangehenden Ansprüche, **dadurch gekennzeichnet, dass** die Aufnahmen (5a - d, 16a - d, 22a - d) als Einhängekerben ausgebildet sind.

5. Trägerelement nach einem der vorangehenden Ansprüche, **dadurch gekennzeichnet, dass** die Aufnahmen (5a - d, 16a - d, 22a - d) als Klemmaufnahmen ausgebildet sind, in denen das Betonkerntemperierungsmodul (9) klemmend gehaltert ist.

6. Trägerelement nach einem der vorangehenden Ansprüche, **dadurch gekennzeichnet, dass** der wenigstens eine Einhängeabschnitt (4, 15, 21) wenigstens drei, vorzugsweise wenigstens vier höhenmäßig versetzt angeordnete Aufnahmen (5a - d, 16a - d, 22a - d) aufweist.

7. Trägerelement nach einem der vorangehenden Ansprüche, **dadurch gekennzeichnet, dass** es als T-Träger mit einem in der Einbaustellung im Wesentlichen horizontalen Aufstellabschnitt (13) und einem dazu im Wesentlichen orthogonal verlaufenden, den wenigstens einen Einhängeabschnitt (15) aufweisenden Trägerabschnitt (14) ausgebildet ist.

8. Trägerelement nach einem der Ansprüche 1 bis 6, **dadurch gekennzeichnet, dass** es zwei vorzugsweise parallel zueinander und in der Einbaustellung im Wesentlichen vertikal stehende, miteinander verbundene Trägerabschnitte (2, 20), die jeweils wenigstens einen Einhängeabschnitt (4, 21) aufweisen, aufweist, wobei zwei einander gegenüberliegende Einhängeabschnitte (4, 21) deckungsgleich zueinander sind.

9. Trägerelement nach Anspruch 8, **dadurch gekennzeichnet, dass** es als H-Träger ausgebildet ist.

10. Trägerelement nach Anspruch 8, **dadurch gekennzeichnet, dass** es als U-Träger ausgebildet ist.

11. Trägerelement nach einem der vorangehenden Ansprüche, **dadurch gekennzeichnet, dass** es als Schiene mit mehreren hintereinander vorgesehenen, jeweils mehrere Aufnahmen (5a - d, 16a - d, 22a - d) aufweisenden Einhängeabschnitten (4, 15, 21) ausgebildet ist.

12. Trägerelement nach Anspruch 11, **dadurch gekennzeichnet, dass** die Anordnung der Aufnahmen (5a - d, 16a - d, 22a - d) der einzelnen Einhängeabschnitte (4, 15, 21) identisch ist.

13. Trägerelement nach Anspruch 11 oder 12, **dadurch gekennzeichnet, dass** die Einhängeabschnitte (4, 15, 21) bzw. die einzelnen einander entsprechenden Aufnahmen (5a - d, 16a - d, 22a - d) zweier hintereinander folgender Einhängeabschnitte (4, 15, 21) jeweils um ein gleichbleibendes Rastermaß (I) voneinander beabstandet sind.

14. Trägerelement nach Anspruch 13, **dadurch gekennzeichnet, dass** das Rastermaß (I) 5 cm oder ein Vielfaches davon beträgt.

15. Trägerelement nach einem der Ansprüche 11 bis 14, **dadurch gekennzeichnet, dass** die Schiene eine Länge zwischen 80 cm und 120 cm, insbesondere von 90 cm bis 100 cm aufweist.

16. Trägerelement nach einem der vorangehenden Ansprüche, **dadurch gekennzeichnet, dass** an einer oder an zwei einander gegenüberliegenden Seiten Verbindungsmittel (24, 25) zum Verbinden mit einem anderen Trägerelement vorgesehen sind.

17. Trägerelement nach Anspruch 16, **dadurch gekennzeichnet, dass** die Verbindungsmittel als Steck- und/oder Rast-Verbindungen (24, 25) ausgebildet sind.

18. Trägerelement nach einem der vorangehenden Ansprüche, **dadurch gekennzeichnet, dass** es aus Kunststoff ist.

19. Trägeelement nach Anspruch 18, **dadurch gekennzeichnet, dass** es ein Spritzguss- oder ein Strangpressteil ist.

20. Trägerelement nach einem der Ansprüche 1 bis 17, **dadurch gekennzeichnet, dass** es aus Metall ist.

21. Betondecke oder Betonboden, umfassend wenigstens ein eingegossenes Betonkerntemperierungsmodul, das an ebenfalls eingegossenen Trägerelementen (1, 12, 18) nach einem der Ansprüche 1 bis 20 gehaltert ist.
